# EUROPEAN PATENT APPLICATION

(11) **EP 4 848 402 A1**
(43) Date of publication of application: **02.12.2026**
(21) Application number: 24921343.0
(22) Date of filing: 31.07.2024
(51) Int. Cl.: H01M 10/42, H01M 10/48

(54) **BATTERY AND ELECTRICAL DEVICE**

(30) Priority: 04.02.2024 CN 202410161443
(71) Applicant: Contemporary Amperex Technology Co., Limited, Ningde, Fujian 352100 (CN)
(72) Inventor: CHEN, Xingdi, Ningde, Fujian 352100 (CN); LONG, Chao, Ningde, Fujian 352100 (CN); ZHANG, Wenhui, Ningde, Fujian 352100 (CN); WANG, Peng, Ningde, Fujian 352100 (CN)
(74) Representative: Gong, Jinping
(86) International application number: PCT/CN2024/109048
(87) International publication number: WO 2025/161311

(57) **Abstract**

A battery (100) and a power consuming apparatus are provided. The battery (100) includes: a case (10), where the case (10) is internally provided with an accommodating space, the case (10) includes a bottom protection plate (102) and a ground point, the bottom protection plate (102) is connected to the ground point, and a conductive exposed area (1021) is provided on a side surface of the bottom protection plate (102) that faces the accommodating space; at least one battery cell (20), where the battery cell (20) is accommodated in the accommodating space, and the battery cell (20) includes a terminal; and an electrical connection assembly (30), where the electrical connection assembly (30) is accommodated in the accommodating space, the electrical connection assembly (30) includes a connecting plate (301), the connecting plate (301) is located between the bottom protection plate (102) and the battery cell (20), the connecting plate (301) is connected to the terminal, and when electrolyte of the battery cell (20) leaks, the connecting plate (301) is electrically connected to the ground point through the electrolyte and the conductive exposed area (1201).

## Description

### CROSS-REFERENCE TO RELATED APPLICATIONS

The present application claims priority to and the benefit of Chinese Patent Application No. 202410161443.2 filed on February 04, 2024 with the State Intellectual Property Office of China, which is incorporated herein by reference in its entirety.

### TECHNICAL FIELD

The present application relates to the field of batteries, and in particular, to a battery and a power consuming apparatus.

### BACKGROUND

Due to a defect of a production process or under an external load, a battery cell may have a leakage of electrolyte. When the battery cell is inverted, the electrolyte is easily leaked to a high-pressure busbar to form a circuit. If maintenance is not performed immediately, high-pressure sparking is easily caused, causing a safety accident.

In the related technology, an electrolyte leakage detection sensor is independently disposed in a case of a battery, to detect a solubility of a gas volatilized from the electrolyte inside the case to identify a liquid leakage in time and sound an alarm for maintenance. However, this manner has high costs due to the additional addition of a liquid leakage sensor and a corresponding detection circuit.

### SUMMARY

In view of the foregoing problem, the present application provides a battery and a power consuming apparatus, to resolve a problem of high costs of a battery caused by use of a leakage sensor.

According to a first aspect, the present application provides a battery. The battery includes:
a case, where the case is internally provided with an accommodating space, the case includes a bottom protection plate and a ground point, the bottom protection plate is electrically connected to the ground point, and a conductive exposed area is provided on a side surface of the bottom protection plate that faces the accommodating space;
at least one battery cell, where the battery cell is accommodated in the accommodating space, and the battery cell includes a terminal; and
an electrical connection assembly, where the electrical connection assembly is accommodated in the accommodating space, the electrical connection assembly includes a connecting plate, the connecting plate is located between the bottom protection plate and the battery cell, the connecting plate is connected to the terminal, and when electrolyte of the battery cell leaks, the connecting plate is electrically connected to the ground point through the electrolyte and the conductive exposed area.

In the technical solution of this embodiment of the present application, after electrolyte of the battery cell leaks, the connecting plate is electrically connected to the ground point by using the electrolyte and the conductive exposed area, so as to trigger an insulation alarm function of the battery, thereby implementing leakage detection of the electrolyte, reducing use of a leakage sensor, and reducing costs of the battery.

In some embodiments, an insulation layer is disposed between the bottom protection plate and the connecting plate, the insulation layer is provided with a through-hole along a thickness direction, and an area of the bottom protection plate corresponding to the through-hole forms the conductive exposed area.

By forming the through-hole on the insulation layer, an area of the bottom protection plate can be exposed from the through-hole. The area can be used as the conductive exposed area. A forming manner of the conductive exposed area is relatively simple.

In some embodiments, the battery includes a plurality of battery cells arranged along a first direction, two side portions that are close to each other and that are of two adjacent battery cells along the first direction correspond to a same conductive exposed area in a third direction, and the first direction is perpendicular to the third direction.

The quantity of conductive exposed areas can be reduced, and the insulation between the bottom protection plate and the battery cell can be improved.

In some embodiments, the battery includes a plurality of battery cells arranged along a second direction, two side portions that are close to each other and that are of two adjacent battery cells along the second direction correspond to a same conductive exposed area in a third direction, and the second direction is perpendicular to the third direction.

The quantity of conductive exposed areas can be reduced, and the insulation between the bottom protection plate and the battery cell can be improved.

In some embodiments, the electrical connection assembly includes an isolating plate located between the bottom protection plate and the battery cell, the connecting plate is disposed on the isolating plate, and the isolating plate is provided with a liquid draining hole for the electrolyte to flow through.

When electrolyte of the battery cell leaks, the electrolyte may flow through the isolating plate and to the conductive exposed area through the liquid draining hole of the isolating plate, so that the connecting plate is electrically connected to the ground point by using the electrolyte and the conductive exposed area.

In some embodiments, a side surface of the isolating plate that faces the battery cell is provided with at least one groove, a side surface of the battery cell having the terminal is disposed corresponding to the groove, and the groove communicates with the liquid draining hole.

When electrolyte of the battery cell leaks, the electrolyte may flow into the groove. As the electrolyte continuously leaks out, the electrolyte in the groove flows out of the groove from the liquid draining hole, and further flows to the conductive exposed area, so that the connecting plate is electrically connected to the ground point.

In some embodiments, the liquid draining hole extends through a bottom surface and/or a side wall of the groove.

Therefore, the electrolyte may flow through the isolating plate through the liquid draining hole from the bottom surface and/or the side wall of the groove, so that the connecting plate is electrically connected to the ground point.

In some embodiments, a side surface of the isolating plate that faces the battery cell is provided with a convex rib, and the convex rib defines the groove.

The forming manner of the groove is simple and efficient.

In some embodiments, the convex rib includes a plurality of first convex ribs, a length direction of the first convex rib is along the first direction, the plurality of first convex ribs is arranged at intervals along the second direction, two adjacent first convex ribs along the second direction define two boundaries of the groove along the second direction, and the first direction is perpendicular to the second direction.

Two adjacent first convex ribs along the second direction define two boundaries of the groove along the second direction, so that in the second direction, the two first convex ribs may define leaked electrolyte, to enable the electrolyte to be collected in the groove, flow out of the groove from the liquid draining hole, and be connected to the conductive exposed area, thereby electrically connecting the connecting plate to the ground point.

In some embodiments, along the second direction, two adjacent grooves are spaced apart by a same first convex rib.

The quantity of first convex ribs is reduced, thereby simplifying the manufacturing process.

In some embodiments, each groove communicates with two liquid draining holes, where one liquid draining hole is located at one end of one first convex rib along the first direction, and the other liquid draining hole is located at the other end of the other first convex rib along the first direction.

The two liquid draining holes may be separated by a relatively long distance, so that when electrolyte leaks at different positions on the battery cell, the electrolyte can flow out of the isolating plate more quickly from one of the liquid draining holes.

In some embodiments, the convex rib includes a plurality of second convex ribs, a length direction of the second convex rib is along the second direction, the plurality of second convex ribs is arranged at intervals along the first direction, two adjacent second convex ribs along the first direction define two boundaries of the groove along the first direction, and the first direction is perpendicular to the second direction.

Two adjacent second convex ribs define two boundaries of the groove along the first direction, so that in the first direction, the two second convex ribs may define leaked electrolyte, to enable the electrolyte to be collected in the groove, flow out of the groove from the liquid draining hole, and be connected to the conductive exposed area, thereby electrically connecting the connecting plate to the ground point.

In some embodiments, along the first direction, two adjacent grooves are spaced apart by a same second convex rib.

The quantity of second convex ribs can be reduced, thereby simplifying the manufacturing process.

In some embodiments, along the second direction, two adjacent grooves communicate with a same liquid draining hole.

The quantity of liquid draining holes can be reduced, thereby simplifying the manufacturing process.

In some embodiments, the battery includes a plurality of rows of battery cells, the plurality of rows of battery cells is arranged along the first direction, each row of battery cells includes at least one battery cell, the battery includes an insulating press strip, a length direction of the press strip is along the second direction, two side portions that are close to each other and that are of two adjacent battery cells along the first direction are connected to a same press strip in the third direction, the press strip separates the bottom protection plate and the electrical connection assembly, and the first direction, the second direction, and the third direction are perpendicular to each other.

Two side portions that are close to each other and that are of two adjacent battery cells along the first direction are connected to a same press strip in the third direction, so that the side portions of all the battery cells are connected together, to facilitate improvement in the stiffness of the battery.

In some embodiments, the groove includes a first slot and a second slot, the first slot communicates with the liquid draining hole through the second slot, a depth of the second slot is greater than a depth of the first slot, and the liquid draining hole is provided at a position on a bottom surface of the second slot close to the press strip.

In an aspect, the depth of the second slot is greater than the depth of the first slot, so that the second slot collects the electrolyte in the first slot and the electrolyte in the second slot, and relatively much electrolyte can be collected in the second slot. In another aspect, the liquid draining hole is provided at a position on the bottom surface of the second slot close to the press strip, so that all or most of the electrolyte can be collected at the liquid draining hole. By combining the foregoing two aspects, the electrolyte is more easily drained from the liquid draining hole, shortening a time length from leakage of the electrolyte to triggering of the insulation alarm function.

In some embodiments, the electrical connection assembly includes an isolating plate located between the bottom protection plate and the battery cell, the connecting plate is disposed on the isolating plate, a side surface of the isolating plate that faces the bottom protection plate is provided with an accommodating slot, and the press strip is partially located in the accommodating slot.

The press strip is partially located in the accommodating slot, so that a height of the whole formed by connecting the press strip to the electrical connection assembly can be reduced in an up-down direction (the third direction), thereby facilitating thinning of the battery in the up-down direction. When the battery is applied to a vehicle, the battery is usually located below a passenger compartment of the vehicle. Therefore, the battery thinned in the up-down direction can reduce occupation of the space of the passenger compartment by the battery, so that the space of the passenger compartment is larger, and the design is more flexible.

In some embodiments, the liquid draining hole communicates with the accommodating slot and the groove.

When electrolyte of the battery cell leaks, the second slot may collect the electrolyte in the first slot and the electrolyte in the second slot. The electrolyte in the second slot may be drained from the liquid draining hole and flow to the accommodating slot. All or a part of the electrolyte may flow along the side wall of the accommodating slot to the side wall of the press strip, then flow along the side wall of the press strip to the through-hole of the insulation layer, and then flow to the conductive exposed area through the through-hole, so that the connecting plate is electrically connected to the ground point. The ground point and the connecting plate are equipotential, and therefore the insulation alarm function of the battery is triggered.

In some embodiments, the battery includes a buffer layer, and the buffer layer is located between the press strip and the bottom protection plate.

When the bottom of the battery is impacted, the buffer layer can reduce or eliminate the impact transmitted from the bottom protection plate to the battery cell, to avoid damage to the battery cell.

In some embodiments, the buffer layer is a buffer layer having a porous structure, and the buffer layer covers the conductive exposed area.

In an aspect, when the electrolyte directly flows from the press strip to the buffer layer, the buffer layer can absorb the electrolyte, and the electrolyte can be drained from the through-hole to the conductive exposed area. In another aspect, when the electrolyte is directly dropped from the press strip to the insulation layer, the electrolyte on the insulation layer flows to the buffer layer. The buffer layer can absorb the electrolyte, and the electrolyte may flow from the through-hole to the conductive exposed area. Then, the buffer layer having a porous structure covers the through-hole in collaboration with the buffer layer, so that the leaked electrolyte is basically collected by the buffer layer and flows from the through-hole to the conductive exposed area, thereby preventing the electrolyte from flowing to another position.

According to a second aspect, the present application provides a power consuming apparatus. The power consuming apparatus includes the battery in any one of the foregoing embodiments. The battery is configured to provide electric energy.

The above description only refers to an overview of the technical solutions of the present application. In order to understand the technical means of the present application more clearly such that it can be implemented according to the content of the specification, and to make the above-mentioned and other purposes, features, and advantages of the present application more apparent, specific examples of the present application are listed below.

### BRIEF DESCRIPTION OF THE DRAWINGS

Various other advantages and benefits will become apparent to a person of ordinary skill in the art upon reading the following detailed description of exemplary implementations. The accompanying drawings are only for the purpose of illustrating the exemplary implementations and are not construed as a limitation to the present application. In addition, in all the accompanying drawings, the same components are indicated by the same reference numerals. In the accompanying drawings:
FIG. 1 is a schematic structural diagram of a vehicle according to some examples of the present application;
FIG. 2 is a schematic diagram of an exploded structure of a battery according to some embodiments of the present application;
FIG. 3 is a schematic structural diagram of a battery according to some examples of the present application;
FIG. 4 is a schematic diagram of another exploded structure of a battery according to some examples of the present application;
FIG. 5 is a top view of a battery according to some examples of the present application;
FIG. 6 is a schematic cross-sectional diagram of the battery in FIG. 5 along a line I-I;
FIG. 7 is a schematic enlarged view of a part A of the battery in FIG. 6;
FIG. 8 is a schematic exploded view of an electrical connection assembly according to some embodiments of the present application;
FIG. 9 is a schematic structural diagram of an insulation layer according to some examples of the present application;
FIG. 10 is a schematic partially exploded view of a battery according to some embodiments of the present application;
FIG. 11 is a schematic enlarged view of a part B of the battery in FIG. 10;
FIG. 12 is a schematic enlarged view of a part D of the battery in FIG. 10;
FIG. 13 is a top view of an isolating plate according to some examples of the present application; and
FIG. 14 is a schematic enlarged view of a part C of the isolating plate in FIG. 13.

Reference numerals in the specific embodiments are as follows:
vehicle 1000;
battery 100, controller 200, and motor 300;
case 10, first part 11, second part 12, accommodating space 101, bottom protection plate 102, conductive exposed area 1021, insulation layer 103, through-hole 104, frame 105, load-bearing plate 106, battery compartment 107, control compartment 108, liquid cooling compartment 109, and receiving slot 110;
battery cell 20, left shoulder 201, and right shoulder 202;
electrical connection assembly 30, connecting plate 301, isolating plate 302, groove 303, liquid draining hole 304, mounting hole 305, sampling assembly 306, convex rib 307, first convex rib 308, second convex rib 309, first hole 310, second hole 311, first slot 312, second slot 313, and accommodating slot 314;
press strip 40; and
buffer layer 50.

### DETAILED DESCRIPTION

The embodiments of the technical solutions of the present application will be described in detail below with reference to the accompanying drawings. The following embodiments are only used to illustrate the technical solutions of the present application more clearly, and are therefore only used as examples, and cannot be used to limit the protection scope of the present application.

Unless otherwise defined, all technical and scientific terms used in this specification have same meanings as those commonly understood by a person skilled in the art to which the present application belongs. The terms used in this specification are only intended to describe specific embodiments, and are not intended to limit the present application. The terms "include", "include", and any variant thereof in the description and the claims of the present application and the description of the accompanying drawings are intended to cover non-exclusive inclusion.

In the description of the embodiments of the present application, the technical terms "first", "second", and the like are only intended to distinguish different objects, and should not be understood as indicating or implying relative importance or implying a quantity, specific order or a primary-secondary relationship of indicated technical features. In the descriptions of the embodiments of the present application, unless otherwise specifically limited, "a plurality of" means two or more than two.

An "embodiment" mentioned in this specification means that a particular feature, structure, or characteristic described with reference to this embodiment may be included in at least one embodiment of the present application. Appearances of the phrase in various positions in this specification are not necessarily all referring to a same embodiment, nor are separate or alternative embodiments mutually exclusive of another embodiment. A person skilled in the art explicitly or implicitly understands that the embodiments described in the specification may be combined with other embodiments.

In the descriptions of the present application, the term "and/or" is merely an association to describe the associated objects. It can mean that there are three kinds of relationships, such as A and/or B, which means that A exists alone, A and B exist at the same time, and B exists alone. In addition, the character "/" in this specification usually indicates an "or" relationship between the associated objects.

In the descriptions of the embodiments of the present application, the term "a plurality of" means two or more (including two). Similarly, "a plurality of groups" means two or more groups (including two groups), and "a plurality of members" means two or more members (including two members).

In the description of the embodiments of the present application, orientations or positional relationships indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "circumferential", or the like are based on orientations or positional relationships shown in the drawings, and are only for the convenience of describing the embodiments of the present application and simplifying the description, and do not indicate or imply that a device or element referred to needs to have a specific orientation, be constructed and operated in a specific orientation, and therefore cannot be understood as limitations to the embodiments of the present application.

In the descriptions of the embodiments of the present application, unless otherwise expressly specified and defined, the technical terms "mounted", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. A person of ordinary skill in the art may understand the specific meanings of the foregoing terms in the embodiments of the present application according to specific situations.

At present, from the perspective of market development, application of power batteries becomes increasingly extensive. The power batteries are not only used in energy storage power systems such as water power plants, fire power plants, wind power plants and solar power plants, but also in electric transportations such as electric bicycles, electric motorcycles, and electric vehicles, as well as in military equipment, aerospace and other fields. With continuously increasing application of the power batteries, the market demand is also constantly expanding.

In the related technology, due to a defect of a production process or under an external load, a battery cell may have a leakage of electrolyte. When the battery cell is inverted, the electrolyte is easily leaked to a high-pressure busbar to form a circuit. If maintenance is not performed immediately, high-pressure sparking is easily caused, causing a safety accident. In the related technology, an electrolyte leakage detection sensor is independently disposed in a case of a battery, to detect a solubility of a gas volatilized from the electrolyte inside the case to identify a liquid leakage in time and sound an alarm for maintenance. However, this manner has high costs due to the additional addition of a liquid leakage sensor and a corresponding detection circuit.

Based on the foregoing consideration, to resolve a problem of high costs of a battery caused by use of a leakage sensor, the present application provides a battery. The battery includes a case, at least one battery cell, and an electrical connection assembly. The case is internally provided with an accommodating space, the case includes a bottom protection plate and a ground point, the bottom protection plate is electrically connected to the ground point, and a conductive exposed area is provided on a side surface of the bottom protection plate that faces the accommodating space; the battery cell is accommodated in the accommodating space, and the battery cell includes a terminal; and the electrical connection assembly is accommodated in the accommodating space, the electrical connection assembly includes a connecting plate, the connecting plate is located between the bottom protection plate and the battery cell, the connecting plate is connected to the terminal, and when electrolyte of the battery cell leaks, the connecting plate is electrically connected to the ground point through the electrolyte and the conductive exposed area.

In such a battery, after electrolyte of the battery cell leaks, the connecting plate is electrically connected to the ground point by using the electrolyte and the conductive exposed area, so as to trigger an insulation alarm function of the battery, thereby implementing leakage detection of the electrolyte, reducing use of a leakage sensor, and reducing costs of the battery.

The battery disclosed in the embodiments of the present application may be applied to power consuming apparatuses using batteries as power supplies or to various energy storage systems using the batteries as energy storage elements. The power consuming apparatus may be but is not limited to a mobile phone, a tablet, a notebook computer, an electric toy, an electric tool, an electric scooter, an electric vehicle, a ship, a spacecraft, or the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

For ease of description, the following embodiment is described by using an example in which a power consuming apparatus according to an embodiment of the present application is a vehicle 1000.

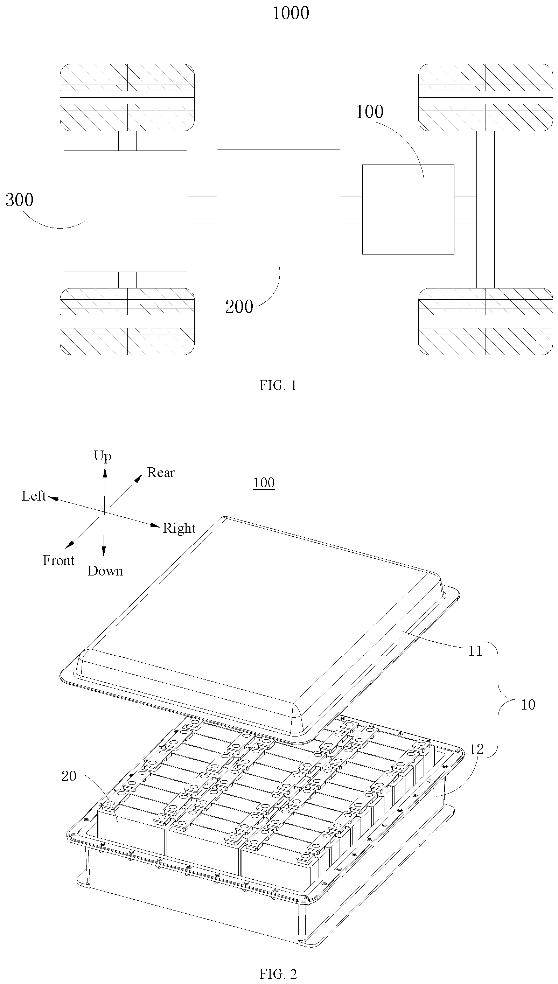

Referring to FIG. 1, FIG. 1 is a schematic structural diagram of a vehicle 1000 according to some embodiments of the present application. The vehicle 1000 may be a fuel powered vehicle, a gas-powered vehicle, or a new energy vehicle, and the new energy vehicle may be a pure electric vehicle, a hybrid electric vehicle, or an extended-range vehicle. The vehicle 1000 is internally provided with a battery 100. The battery 100 may be arranged at the bottom, head, or tail of the vehicle 1000. The battery 100 may be configured to supply power to the vehicle 1000. For example, the battery 100 may be used as an operating power supply of the vehicle 1000. The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 may serve not only as an operating power supply of the vehicle 1000, but also as a driving power supply of the vehicle 1000, to alternatively or partially replace fuel or natural gas to provide driving power for the vehicle 1000.

Referring to FIG. 2, FIG. 2 is an exploded view of a battery 100 according to some embodiments of the present application. The battery 100 includes a case 10 and battery cells 20, where the battery cells 20 are accommodated in the case 10. The case 10 is configured to provide an accommodating space 101 for the battery cells 20. The case 10 may adopt a variety of structures. In some embodiments, the case 10 may include a first part 11 and a second part 12, the first part 11 and the second part 12 cover each other, and the first part 11 and the second part 12 jointly define the accommodating space for accommodating the battery cells 20. The second part 12 may be a hollow structure being open on one side, the first part 11 may be a plate-like structure, and the first part 11 covers an open side of the second part 12, so that the first part 11 and the second part 12 jointly define the accommodating space. Alternatively, each of the first part 11 and the second part 12 may be a hollow structure being open on one side, and an open side of the first part 11 covers an open side of the second part 12. Certainly, the case 10 formed by the first part 11 and the second part 12 may be in various shapes, such as a cylinder and a cuboid.

In the battery 100, there may be a plurality of battery cells 20, and a plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the case 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and accommodated in the case 10. The battery 100 may further include other structures, for example, the battery 100 may also include a busbar component for achieving electrical connection between a plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat-shaped, cuboid-shaped, or of another shape.

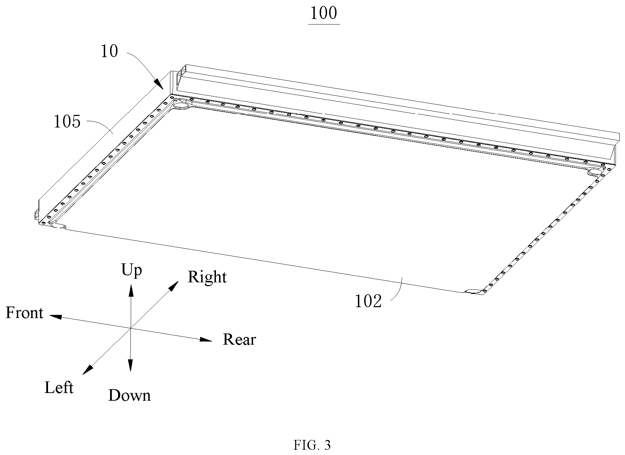

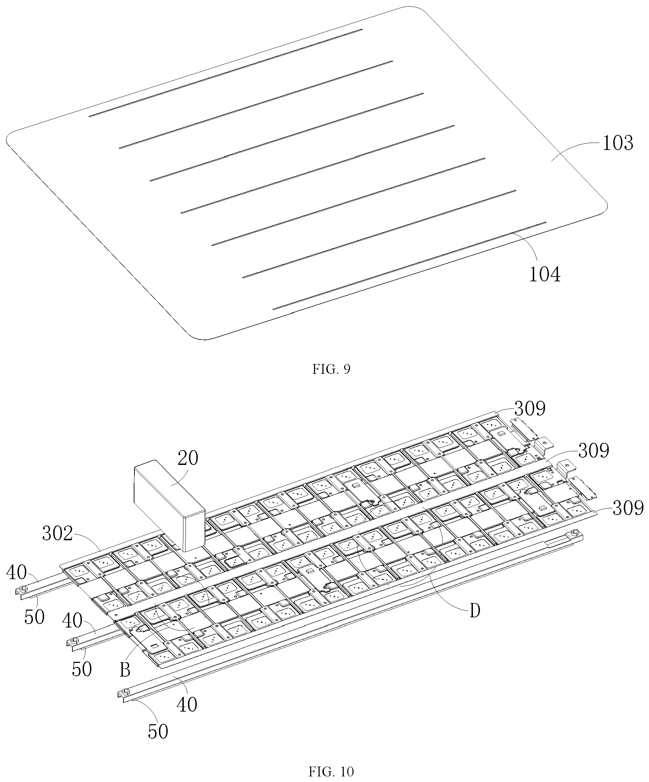

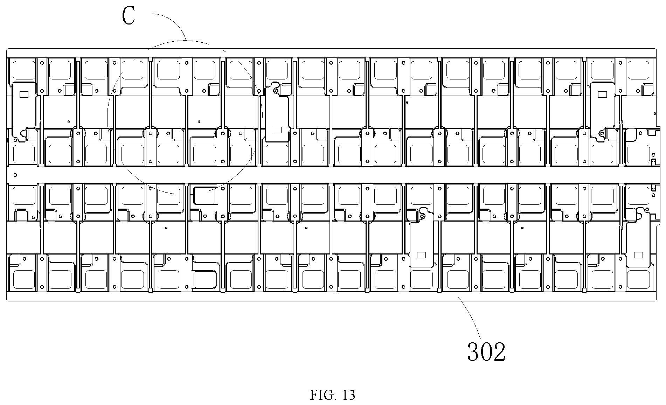

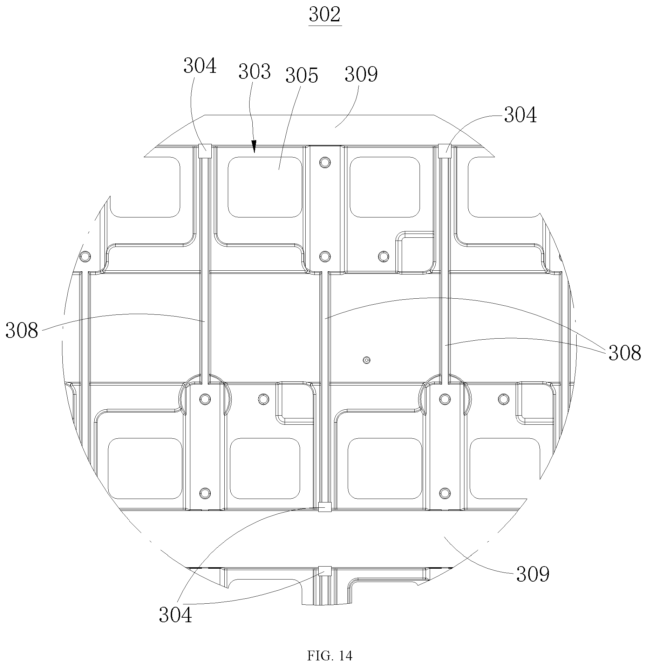

According to some embodiments of the present application, with reference to FIG. 3 to FIG. 14 together, an embodiment of the present application provides a battery 100. The battery 100 includes a case 10, at least one battery cell 20, and an electrical connection assembly 30. The case 10 is internally provided with an accommodating space 101, the case 10 includes a bottom protection plate 102 and a ground point, the bottom protection plate 102 is electrically connected to the ground point, and a conductive exposed area 1021 is provided on a side surface of the bottom protection plate 102 that faces the accommodating space 101; the battery cell 20 is accommodated in the accommodating space 101, and the battery cell 20 includes a terminal; and the electrical connection assembly 30 is accommodated in the accommodating space 101, the electrical connection assembly 30 includes a connecting plate 301, the connecting plate 301 is located between the bottom protection plate 102 and the battery cell 20, the connecting plate 301 is connected to the terminal, and when electrolyte of the battery cell 20 leaks, the connecting plate 301 is electrically connected to the ground point through the electrolyte and the conductive exposed area 1021.

A material and a shape of the case 10 are not specifically limited in the present application. Optionally, the case 10 may be a metal case 10 (for example, an aluminum alloy or stainless steel), and the case 10 is approximately cuboid-shaped.

Optionally, the case 10 further includes a frame 105 and a load-bearing plate 106. The load-bearing plate 106 and the bottom protection plate 102 are respectively connected to two side surfaces of the frame 105 along the third direction. The load-bearing plate 106 and the frame 105 may be integrally connected through soldering, Flow Drill Screw (FDS), gluing, or the like, to serve as a main load-bearing member. The battery cell 20 may be connected to the load-bearing plate 106 through gluing. The bottom protection plate 102 may be connected to the frame 105 in a detachable manner. The detachable manner includes, but is not limited to, bolting and snap-fit.

In an embodiment, the battery cell 20 may be mounted in the accommodating space 101 upside down. The upside down may be understood as that when the battery 100 is mounted on a power consuming apparatus (for example, the vehicle 1000), a terminal and an anti-explosion valve of the battery cell 20 are disposed downward. The anti-explosion valve and the terminal of the inverted battery cell 20 face downward, so that a risk of the passenger compartment can be reduced during high-pressure sparking and thermal runaway. When the battery cell 20 is mounted, the load-bearing plate 106 and the frame 105 may be first fixed together. A side of the frame 105 that faces away from the load-bearing plate 106 has a mounting port. The mounting port is disposed upward. The battery cell 20 is mounted on the load-bearing plate 106 right-side up from the mounting port, and the battery cell 20 and the load-bearing plate 106 are connected together by using an adhesive. Then, the bottom protection plate 102 is fixedly connected to the frame 105. Then, the case 10 is inverted, so that the bottom protection plate 102 is on a lower side of the frame 105, and the load-bearing plate 106 is on an upper side of the frame 105. When the case 10 is inverted, the battery cell 20 may be driven to be inverted, so that the terminal and the anti-explosion valve face downward. It may be understood that the foregoing mounting process should not be construed as a limitation on the protection scope of the present application. In an embodiment, the battery cell 20 may be mounted in the accommodating space 101 right-side up.

Optionally, the accommodating space 101 is divided into three subspaces: a battery compartment 107, a control compartment 108, and a liquid cooling compartment 109. The battery 100 further includes a control assembly and a liquid cooling assembly, and the battery cell 20 is accommodated in the battery compartment 107. The control assembly may be accommodated in the control compartment 108, and the liquid cooling assembly may be accommodated in the liquid cooling compartment 109. The control assembly is electrically connected to the battery cell 20. The control assembly is further electrically connected to an electrical load and a power supply, and is configured to control discharging and charging of the battery cell 20. The control assembly may include a main control box, and the main control box may include a management system of the battery 100. The liquid cooling assembly may include a liquid cooling joint. The liquid cooling joint may be connected to a liquid cooling device outside the battery 100, so that the liquid cooling device dissipates heat from the battery 100.

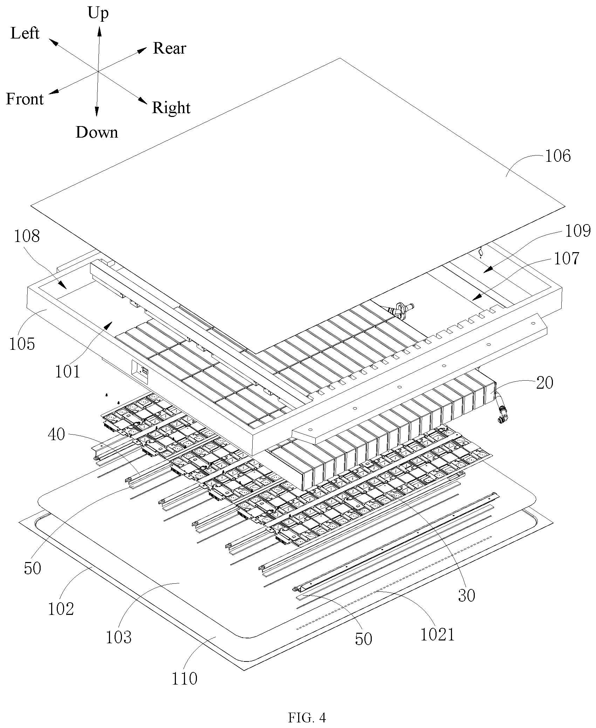

At least one battery cell 20 is disposed in the accommodating space 101. In FIG. 4, a plurality of battery cells 20 are disposed in the battery compartment 107, and the plurality of battery cells 20 are arranged along a first direction and a second direction. Optionally, the plurality of battery cells 20 arranged along the second direction form a row of battery cells 20. A plurality of rows of battery cells 20 are arranged along the first direction. The first direction, the second direction, and the third direction are perpendicular to each other. In FIG. 4, the first direction is a left-right direction, the second direction is a front-rear direction, and the third direction is an up-down direction. It may be understood that, in another embodiment, the first direction, the second direction, and the third direction may alternatively be other directions, which are not specifically limited in the present application. It may be understood that, in another embodiment, each row of battery cells 20 may include one battery cell 20. In another embodiment, one battery cell 20 may be disposed in the accommodating space 101.

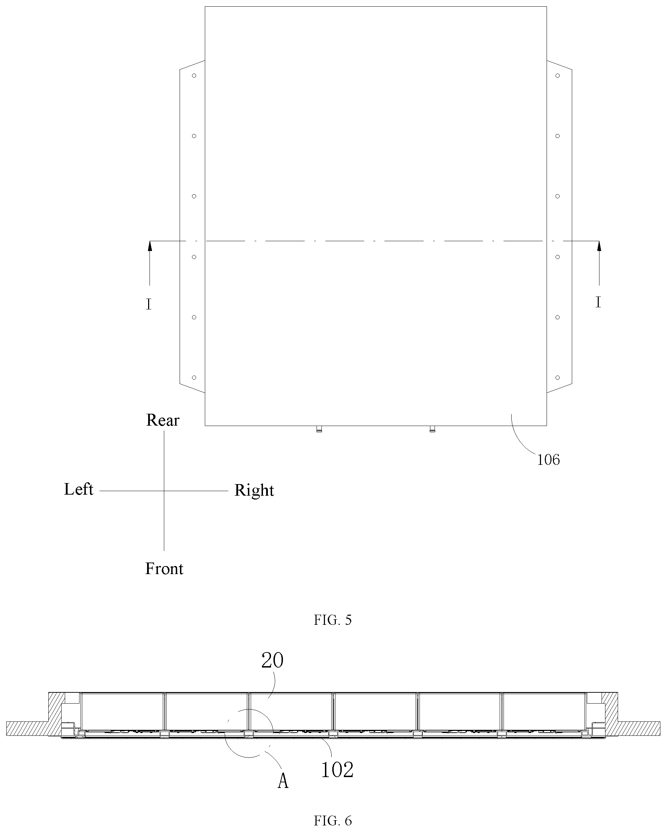

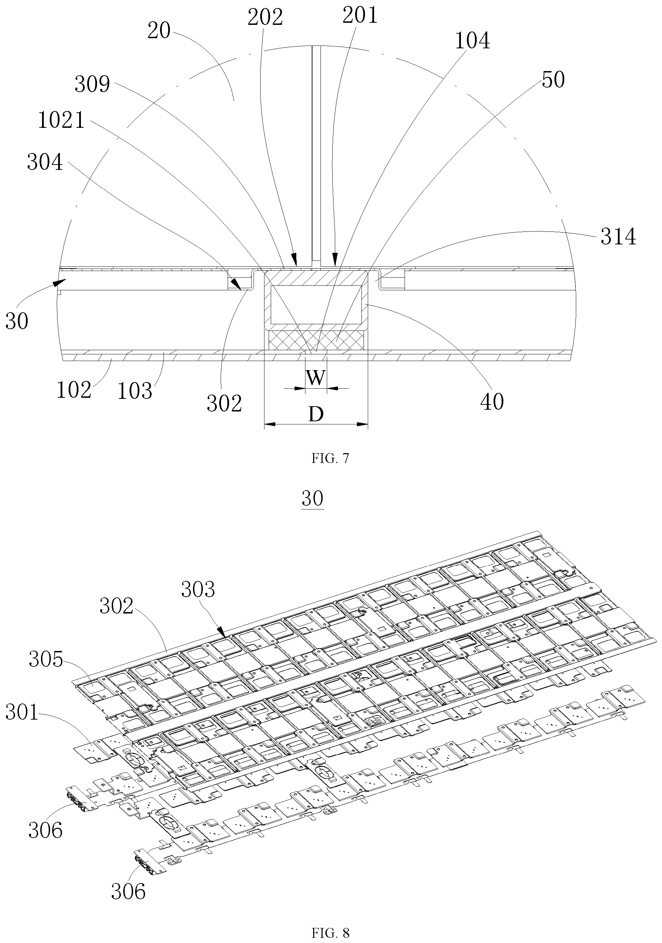

The battery cell 20 includes two shoulders. The shoulder may be understood as a part, on a first side surface of the battery cell 20 having a terminal, of the first side surface that is located between the terminal and a second side surface close to the terminal, and the second side surface is perpendicular to the first side surface. With reference to FIG. 6 and FIG. 7, the first side surface is a lower side surface of the battery cell 20. The second side surface includes a left side surface and a right side surface. The battery cell 20 includes a left terminal and a right terminal. The two shoulders of the battery cell 20 include a left shoulder 201 and a right shoulder 202. The left shoulder 201 is a part of the lower side surface located between the left terminal and the left side surface. The right shoulder 202 is a part of the lower side surface located between the right terminal and the right side surface.

The electrical connection assembly 30 may be electrically connected to the battery cell 20. Specifically, one battery cell 20 includes two terminals, and each terminal is welded to one corresponding connecting plate 301. Optionally, the electrical connection assembly 30 further includes an isolating plate 302. A side surface of the isolating plate 302 facing the battery cell 20 is further provided with a mounting hole 305. Each connecting plate 301 corresponds to one mounting hole 305 and is connected to a terminal through the mounting hole 305. The mounting hole 305 may limit the connecting plate 301. Optionally, the connecting plate 301 may connect a row of battery cells 20 in series to form an energy block, and energy blocks in different rows may be connected in parallel by using connecting plates 301, to form a series-parallel connection of the battery cells 20. It may be understood that an electrical connection manner of the battery cell 20 is not specifically limited in the present application. Optionally, the connecting plate 301 may be an aluminum busbar.

Optionally, with reference to FIG. 8, the electrical connection assembly 30 further includes a sampling assembly 306, and the sampling assembly 306 is fixed on the isolating plate 302. The sampling assembly 306 may collect battery information such as temperature information and voltage information of the corresponding battery cell 20 by using the connecting plate 301. The sampling assembly 306 may be electrically connected to the control assembly, and transmit the battery information to the control assembly. The control assembly may control a state of the battery cell 20 according to the battery information, for example, control the battery cell 20 to charge, discharge, cool, heat up, and shut down.

Optionally, the conductive exposed area 1021 is an area of the bottom protection plate 102 that faces the accommodating space 101. The conductive exposed area 1021 is conductive. Apart from the area, another area of the bottom protection plate 102 that faces the accommodating space 101 may be insulating, so as to insulate the bottom protection plate 102 from the battery cell 20. When electrolyte of the battery cell 20 leaks, the connecting plate 301 may be electrically connected to the ground point by using the electrolyte and the conductive exposed area 1021, so that the ground point and the connecting plate 301 are equipotential.

In the battery 100 or the power consuming apparatus of the present application, because the bottom protection plate 102 is made of a metal that can conduct electricity, when being electrically connected to the ground point, the bottom protection plate 102 is equipotential with the power consuming apparatus (for example, a car body), and communication between a high voltage (for example, the connecting plate 301) of a battery cell at an electrolyte leakage position and the ground point can trigger an insulation alarm of the battery 100, to instruct after-sales personnel to perform maintenance.

To sum up, in the technical solution of this embodiment of the present application, after electrolyte of the battery cell 20 leaks, the connecting plate 301 is electrically connected to the ground point by using the electrolyte and the conductive exposed area 1021, so as to trigger an insulation alarm function of the battery 100, thereby implementing leakage detection of the electrolyte, reducing use of a leakage sensor, and reducing costs of the battery 100.

According to some embodiments of the present application, optionally, an insulation layer 103 is disposed between the bottom protection plate 102 and the connecting plate 301, the insulation layer 103 is provided with a through-hole 104 along a thickness direction, and an area of the bottom protection plate 102 corresponding to the through-hole 104 forms the conductive exposed area 1021.

Optionally, the insulation layer 103 may be an insulation layer 103 formed by spraying an insulation paint on the bottom protection plate 102. Optionally, the insulation layer 103 may be an insulation layer 103 formed by an insulation strip or an insulation film pasted to the bottom protection plate 102, or may be an insulation layer 103 formed by an insulation plate mounted between the bottom protection plate 102 and the connecting plate 301. This is not specifically limited in the present application.

A shape and a material of the insulation layer 103 are not specifically limited in the present application. For the insulation strip, the insulation film, or the insulation plate, optionally, the insulation layer 103 has a flat cuboid shape, and a material of the insulation layer 103 may be plastic, a mica sheet, or the like. The insulation layer 103 is mainly used for implementing electrical isolation after the bottom protection plate 102 is deformed and comes into contact with the connecting plate 301 when the battery 100 is subject to bottom ball impact, to avoid short-circuit and sparking.

The through-hole 104 may expose an area of the bottom protection plate 102, and the area may be the conductive exposed area 1021. A quantity and a shape of through-holes 104 are not specifically limited in the present application. Optionally, the through-hole 104 may be a square hole. Specifically, when the electrolyte of the battery cell 20 leaks, the electrolyte may flow into the through-hole 104 and come into contact with the conductive exposed area 1021, so that the connecting plate 301 is electrically connected to the ground point.

Optionally, the bottom protection plate 102 is provided with a receiving slot 110. The receiving slot 110 can pre-position the insulation layer 103, to facilitate mounting of the insulation layer 103.

By forming the through-hole 104 on the insulation layer 103, an area of the bottom protection plate 102 can be exposed from the through-hole 104. The area can be used as the conductive exposed area 1021. A forming manner of the conductive exposed area 1021 is relatively simple.

According to some embodiments of the present application, optionally, the battery 100 includes a plurality of battery cells 20 arranged along a first direction, two side portions that are close to each other and that are of two adjacent battery cells 20 along the first direction correspond to a same conductive exposed area 1021 in a third direction, and the first direction is perpendicular to the third direction.

Optionally, in FIG. 4, the first direction is a left-right direction, and the third direction is an up-down direction. That is, the battery 100 includes a plurality of battery cells 20 arranged in the left-right direction. Two side portions of two adjacent battery cells 20 close to each other along the left-right direction are a right shoulder 202 of a left battery cell 20 and a left shoulder 201 of a right battery cell 20. The right shoulder 202 of the left battery cell 20 and the left shoulder 201 of the right battery cell 20 correspond to a same conductive exposed area 1021 in the up-down direction.

In two battery cells 20 corresponding to a same conductive exposed area 1021 in the up-down direction, when electrolyte of any battery cell 20 leaks, a connecting plate 301 of the battery cell 20 whose electrolyte leaks may be electrically connected to the ground point by using the electrolyte and the conductive exposed area 1021.

In this way, the quantity of conductive exposed areas 1021 can be reduced, and the insulation between the bottom protection plate 102 and the battery cell 20 can be improved.

According to some embodiments of the present application, optionally, the battery 100 includes a plurality of battery cells 20 arranged along a second direction, two side portions that are close to each other and that are of two adjacent battery cells 20 along the second direction correspond to a same conductive exposed area 1021 in a third direction, and the second direction is perpendicular to the third direction.

Optionally, in FIG. 4, the second direction is a front-rear direction, and the third direction is an up-down direction. That is, the battery 100 includes a plurality of battery cells 20 arranged in the front-rear direction. Two side portions of two adjacent battery cells 20 close to each other along the front-rear direction may be a left shoulder 201 of a front battery cell 20 and a left shoulder 201 of a rear battery cell 20. The left shoulder 201 of the front battery cell 20 and the left shoulder 201 of the rear battery cell 20 correspond to a same conductive exposed area 1021 in the up-down direction. Two side portions of two adjacent battery cells 20 close to each other along the front-rear direction may alternatively be a right shoulder 202 of a front battery cell 20 and a right shoulder 202 of a rear battery cell 20. The right shoulder 202 of the front battery cell 20 and the right shoulder 202 of the rear battery cell 20 correspond to a same conductive exposed area 1021 in the up-down direction.

In two battery cells 20 corresponding to a same conductive exposed area 1021 in the up-down direction, when electrolyte of any battery cell 20 leaks, a connecting plate 301 of the battery cell 20 whose electrolyte leaks may be electrically connected to the ground point by using the electrolyte and the conductive exposed area 1021.

In this way, the quantity of conductive exposed areas 1021 can be reduced, and the insulation between the bottom protection plate 102 and the battery cell 20 can be improved.

According to some embodiments of the present application, optionally, the electrical connection assembly 30 includes an isolating plate 302 located between the bottom protection plate 102 and the battery cell 20, the connecting plate 301 is disposed on the isolating plate 302, and the isolating plate 302 is provided with a liquid draining hole 304 for the electrolyte to flow through.

The isolating plate 302 may provide a fixing structure of the connecting plate 301 and the sampling assembly, and separate the battery cell 20 and the bottom protection plate 102. Optionally, in an embodiment, the isolating plate 302 may be located between the insulation layer 103 and the battery cell 20. When electrolyte of the battery cell 20 leaks, the electrolyte may flow through the isolating plate 302 and to the conductive exposed area 1021 through the liquid draining hole 304 of the isolating plate 302, so that the connecting plate 301 is electrically connected to the ground point by using the electrolyte and the conductive exposed area 1021.

The isolating plate 302 may be made of an insulating material. Optionally, the isolating plate 302 may be an isolating plate 302 of an integral structure.

According to some embodiments of the present application, optionally, a side surface of the isolating plate 302 that faces the battery cell 20 is provided with at least one groove 303, a side surface of the battery cell 20 having the terminal is disposed corresponding to the groove 303, and the groove 303 communicates with the liquid draining hole 304.

Optionally, one groove 303 may correspond to one battery cell 20, or two or more grooves 303 correspond to one battery cell 20, or one groove 303 corresponds to two or more battery cells 20. This is not specifically limited in the present application.

A shape of the groove 303 is not specifically limited in the present application. Optionally, the groove 303 may be square.

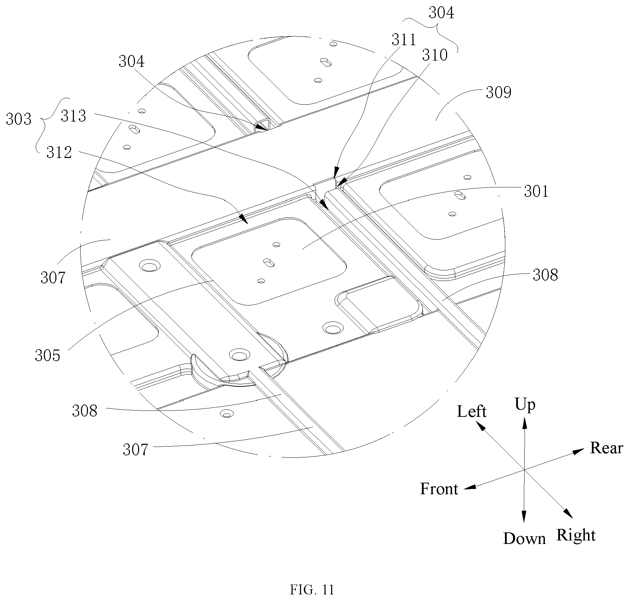

Optionally, in FIG. 11, the mounting hole may extend through a bottom surface of the groove 303. The connecting plate 301 is connected to the terminal from the bottom surface of the groove 303. Each connecting plate 301 corresponds to one mounting hole 305 and is connected to the terminal through the mounting hole 305.

Optionally, a side surface of the isolating plate 302 that faces battery cells 20 is provided with a plurality of grooves 303, and side surfaces (for example, lower side surfaces in FIG. 7) of the battery cells 20 having terminals are disposed in a one-to-one correspondence with the grooves 303. In an embodiment, a side surface of the battery cell 20 having the terminal is further provided with an anti-explosion valve. The anti-explosion valve may be located between two terminals. When the anti-explosion valve ejects the electrolyte, the electrolyte can be directly ejected into the groove 303, so that the electrolyte can flow to the bottom protection plate 102 more rapidly, shortening a time length from leakage of the electrolyte to triggering of the insulation alarm function. Optionally, a side surface of the battery cell 20 having the terminal may be accommodated in the groove 303, thereby further shortening the foregoing time length.

When electrolyte of the battery cell 20 leaks, the electrolyte may flow into the groove 303. As the electrolyte continuously leaks out, the electrolyte in the groove 303 flows out of the groove 303 from the liquid draining hole 304, and further flows to the conductive exposed area 1021, so that the connecting plate 301 is electrically connected to the ground point.

The groove 303 may collect the leaked electrolyte, so that the electrolyte can more easily flow out from the liquid draining hole 304.

According to some embodiments of the present application, optionally, the liquid draining hole 304 extends through a bottom surface and/or a side wall of the groove 303.

Optionally, in an embodiment, the liquid draining hole 304 extends through a side wall of the groove 303. When electrolyte of the battery cell 20 leaks, the electrolyte flowing to the side wall of the groove 303 may flow through the isolating plate 302 along the liquid draining hole 304, and flow to the conductive exposed area 1021, so that the connecting plate 301 is electrically connected to the ground point.

Optionally, in an embodiment, the liquid draining hole 304 extends through a bottom surface of the groove 303. When electrolyte of the battery cell 20 leaks, the electrolyte flowing to the bottom surface of the groove 303 may flow through the isolating plate 302 along the liquid draining hole 304, and flow to the conductive exposed area 1021, so that the connecting plate 301 is electrically connected to the ground point.

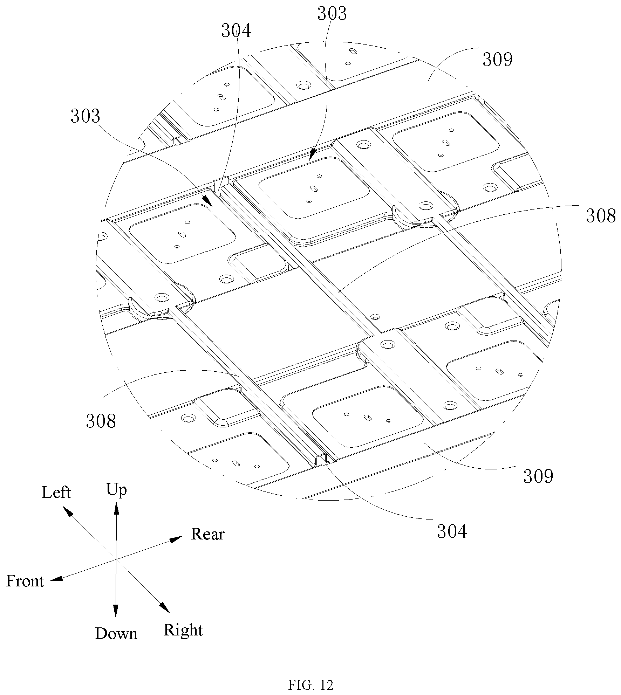

Optionally, in an embodiment, in FIG. 12, the liquid draining hole 304 extends through a bottom surface and a side wall of the groove 303. When electrolyte of the battery cell 20 leaks, the electrolyte flowing to the side wall of the groove 303 may flow through the isolating plate 302 along the liquid draining hole 304, and the electrolyte flowing to the bottom surface of the groove 303 may flow through the isolating plate 302 along the liquid draining hole 304, and flow to the conductive exposed area 1021, so that the connecting plate 301 is electrically connected to the ground point.

Therefore, the electrolyte may flow through the isolating plate 302 through the liquid draining hole 304 from the bottom surface and/or the side wall of the groove 303, so that the connecting plate 301 is electrically connected to the ground point.

According to some embodiments of the present application, optionally, a side surface of the isolating plate 302 that faces the battery cell 20 is provided with a convex rib, and the convex rib defines the groove 303.

Optionally, the isolating plate 302 may be an integrally formed structure. When the isolating plate is manufactured in one piece, the convex rib 307 may be formed, and the convex rib 307 may define the groove 303. Therefore, the forming manner of the groove 303 is simple and efficient.

According to some embodiments of the present application, optionally, the convex rib 307 includes a plurality of first convex ribs 308, a length direction of the first convex rib 308 is along the first direction, the plurality of first convex ribs 308 is arranged at intervals along the second direction, two adjacent first convex ribs 308 along the second direction define two boundaries of the groove 303 along the second direction, and the first direction is perpendicular to the second direction.

Optionally, with reference to FIG. 4, the first direction is a left-right direction, and the second direction is a front-rear direction. That is, the length direction of the first convex rib 308 is along the left-right direction, a plurality of first convex ribs 308 is arranged at intervals along the front-rear direction, and two adjacent first convex ribs 308 along the front-rear direction define two boundaries of the groove 303 along the front-rear direction.

Two adjacent first convex ribs 308 along the second direction define two boundaries of the groove 303 along the second direction, so that in the second direction, the two first convex ribs 308 may define leaked electrolyte, to enable the electrolyte to be collected in the groove 303, flow out of the groove 303 from the liquid draining hole 304, and be connected to the conductive exposed area 1021, thereby electrically connecting the connecting plate 301 to the ground point.

According to some embodiments of the present application, optionally, along the second direction, two adjacent grooves 303 are spaced apart by a same first convex rib 308.

Optionally, with reference to FIG. 4, the second direction is a front-rear direction. Along the front-rear direction, two adjacent grooves 303 are spaced apart by a same first convex rib 308, so that the quantity of first convex ribs 308 can be reduced, and the process can be simplified.

According to some embodiments of the present application, optionally, each groove 303 communicates with two liquid draining holes 304, where one liquid draining hole 304 is located at one end of one first convex rib 308 along the first direction, and the other liquid draining hole 304 is located at the other end of the other first convex rib 308 along the first direction.

Optionally, with reference to FIG. 4 and FIG. 12 to FIG. 14, the groove 303 is roughly square, one liquid draining hole 304 is located at a right end of a front first convex rib 308, and the other liquid draining hole 304 is located at a left end of a rear first convex rib 308. Therefore, the two liquid draining holes 304 may be separated by a relatively long distance, so that when electrolyte leaks at different positions on the battery cell 20, the electrolyte can flow out of the isolating plate more quickly from one of the liquid draining holes 304.

It may be understood that, in another embodiment, the quantity of liquid draining holes 304 communicating with each groove 303 is not limited to two, and may alternatively be one or more than two. This is not specifically limited in the present application.

According to some embodiments of the present application, optionally, the convex rib 307 includes a plurality of second convex ribs 309, a length direction of the second convex rib 309 is along the second direction, the plurality of second convex ribs 309 is arranged at intervals along the first direction, two adjacent second convex ribs 309 along the first direction define two boundaries of the groove 303 along the first direction, and the first direction is perpendicular to the second direction.

Optionally, with reference to FIG. 4, the first direction is a left-right direction, and the second direction is a front-rear direction. That is, the length direction of the second convex rib 309 is along the front-rear direction, the plurality of second convex ribs 309 is arranged at intervals along the left-right direction, and two adjacent second convex ribs 309 along the left-right direction define two boundaries of the groove 303 along the left-right direction.

Two adjacent second convex ribs 309 define two boundaries of the groove 303 along the first direction, so that in the first direction, the two second convex ribs 309 may define leaked electrolyte, to enable the electrolyte to be collected in the groove 303, flow out of the groove 303 from the liquid draining hole 304, and be connected to the conductive exposed area 1021, thereby electrically connecting the connecting plate 301 to the ground point.

With reference to FIG. 12 to FIG. 14, boundaries of one groove 303 may be defined by two second convex ribs 309 arranged at an interval along the first direction and two first convex ribs 308 arranged at an interval along the second direction. The first convex ribs 308 and the second convex ribs 309 are substantially perpendicular to each other, which also helps to increase structural strength of the isolating plate 302.

Optionally, a length of the second convex rib 309 along the second direction may be substantially the same as a length of each row of battery cells 20.

According to some embodiments of the present application, optionally, along the first direction, two adjacent grooves 303 are spaced apart by a same second convex rib 309.

Optionally, with reference to FIG. 4, the first direction is a left-right direction. Along the left-right direction, two adjacent grooves 303 are spaced apart by a same second convex rib 309, so that the quantity of second convex ribs 309 can be reduced, and the process can be simplified.

According to some embodiments of the present application, optionally, along the second direction, two adjacent grooves 303 communicate with a same liquid draining hole 304.

Optionally, with reference to FIG. 4, the second direction is a front-rear direction. Along the front-rear direction, two adjacent grooves 303 communicate with a same liquid draining hole 304. Therefore, the quantity of liquid draining holes 304 can be reduced, thereby simplifying the manufacturing process.

With reference to FIG. 12, the liquid draining hole 304 is located at the left rear of a front groove 303, and is located at the left front of a rear groove 303. When electrolyte leaked in any groove 303 in the two grooves 303 communicating with the liquid draining hole 304 may flow out of the isolating plate through the liquid draining hole 304 and flow to the conductive exposed area 1021, the connecting plate 301 is electrically connected to the ground point.

Optionally, in FIG. 11, the liquid draining hole 304 may include a first hole 310 and a second hole 311. The first hole 310 is located between the first convex rib 308 and the second convex rib 309, and the second hole 311 is disposed on a side plate of the second convex rib 309 that faces the first convex rib 308.

The liquid draining hole 304 separates the first convex rib 308 and the second convex rib 309. When the electrolyte of the battery cell 20 leaks, the electrolyte flows from the middle of the groove 303 to the side wall of the groove 303. Because the groove 303 is defined by the convex rib 307, and the side wall of the groove 303 is a part of the convex rib 307, the electrolyte flowing to the side wall of the groove 303 may flow along extension directions of the first convex rib 308 and the second convex rib 309. The liquid draining hole 304 separates the first convex rib 308 and the second convex rib 309, so that each of the electrolyte flowing along the first convex rib 308 and the electrolyte flowing along the second convex rib 309 can flow to the liquid draining hole 304, thereby further shortening a time length from leakage of the electrolyte to triggering of the insulation alarm function.

According to some embodiments of the present application, optionally, the battery 100 includes a plurality of rows of battery cells 20, the plurality of rows of battery cells 20 is arranged along the first direction, each row of battery cells 20 includes at least one battery cell 20, the battery 100 includes an insulating press strip 40, a length direction of the press strip 40 is along the second direction, two side portions that are close to each other and that are of two adjacent battery cells 20 along the first direction are connected to a same press strip 40 in the third direction, the press strip 40 separates the bottom protection plate 102 and the electrical connection assembly 30, and the first direction, the second direction, and the third direction are perpendicular to each other.

Optionally, with reference to FIG. 4, the first direction is a left-right direction, the second direction is a front-rear direction, and the third direction is an up-down direction. That is, two side portions that are close to each other and that are of two adjacent battery cells 20 along the left-right direction are connected to a same press strip 40 in the up-down direction.

The press strip 40 is insulating. Optionally, the press strip 40 may be an integral structural member. The press strip 40 may separate the electrical connection assembly 30 and the insulation layer 103. With reference to FIG. 7, two side portions of two adjacent battery cells 20 close to each other along the left-right direction are a right shoulder 202 of a left battery cell 20 and a left shoulder 201 of a right battery cell 20 respectively. The right shoulder 202 of the left battery cell 20 and the left shoulder 201 of the right battery cell 20 are connected to a same press strip 40 in the up-down direction.

Optionally, a length of the press strip 40 is approximately the same as a length of each row of battery cells 20 along the second direction. In FIG. 7, the press strip 40 is connected to a side portion of the battery cell 20 by using the isolating plate 302. In the third direction, the press strip 40 is disposed corresponding to the second convex rib 309. Two adjacent rows of battery cells 20 may be connected together by using a same press strip 40, so that the side portions of all the battery cells 20 are connected together, to facilitate improvement in the stiffness of the battery 100.

Optionally, in the third direction, an orthographic projection of the press strip 40 on the insulation layer 103 and the through-hole 104 have an overlapping part. Further optionally, in the third direction, the through-hole 104 falls within a range of the orthographic projection of the press strip 40 on the insulation layer 103, or does not exceed a range of the orthographic projection of the press strip 40 on the insulation layer 103. With reference to FIG. 7, a width of the through-hole 104 is W, and a width of the press strip 40 is D, satisfying 0 < W ≤ D.

According to some embodiments of the present application, optionally, the groove 303 includes a first slot 312 and a second slot 313, the first slot 312 communicates with the liquid draining hole 304 through the second slot 313, a depth of the second slot 313 is greater than a depth of the first slot 312, and the liquid draining hole 304 is provided at a position on a bottom surface of the second slot 313 close to the press strip 40.

Optionally, a position on the bottom surface of the second slot 313 close to the press strip 40 may be a lowest point of the groove 303 close to the press strip 40. The liquid draining hole 304 is provided at the lowest point, so that all or most of the electrolyte can be collected at the liquid draining hole 304. Specifically, in the third direction, the orthographic projection of the battery cell 20 on the isolating plate 302 has a larger part corresponding to the first slot 312, and a smaller part corresponding to the second slot 313. When the electrolyte of the battery cell 20 leaks, the electrolyte may fall into the first slot 312 and the second slot 313, the electrolyte in the second slot 313 may directly flow into the liquid draining hole 304, and the electrolyte in the first slot 312 may flow into the second slot 313 and flow into the liquid draining hole 304 through the second slot 313. The electrolyte drained from the liquid draining hole 304 may flow to the conductive exposed area 1021 through the through-hole 104 on the insulation layer 103, so that the connecting plate 301 is electrically connected to the ground point.

In an aspect, the depth of the second slot 313 is greater than the depth of the first slot 312, so that the second slot 313 collects the electrolyte in the first slot 312 and the electrolyte in the second slot 313, and relatively much electrolyte can be collected in the second slot 313. In another aspect, the liquid draining hole 304 is provided at a position on the bottom surface of the second slot 313 close to the press strip 40, so that all or most of the electrolyte can be collected at the liquid draining hole 304. By combining the foregoing two aspects, the electrolyte is more easily drained from the liquid draining hole 304, shortening a time length from leakage of the electrolyte to triggering of the insulation alarm function.

According to some embodiments of the present application, optionally, the electrical connection assembly 30 includes an isolating plate 302 located between the bottom protection plate 102 and the battery cell 20, the connecting plate 301 is disposed on the isolating plate 302, a side surface of the isolating plate 302 that faces the bottom protection plate is provided with an accommodating slot 314, and the press strip 40 is partially located in the accommodating slot 314.

Optionally, in FIG. 7, an insulation layer 103 is disposed between the bottom protection plate 102 and the isolating plate 302, a side surface of the isolating plate 302 that faces the bottom protection plate 102 is a side surface of the isolating plate 302 that faces the insulation layer 103, the side surface is a lower side surface, and the lower side surface of the isolating plate 302 is provided with an accommodating slot 314. The press strip 40 is partially located in the accommodating slot 314, so that a height of the whole formed by connecting the press strip 40 to the electrical connection assembly 30 can be reduced in an up-down direction (the third direction), thereby facilitating thinning of the battery 100 in the up-down direction. When the battery 100 is applied to a vehicle 1000, the battery 100 is usually located below a passenger compartment of the vehicle 1000. Therefore, the battery 100 thinned in the up-down direction can reduce occupation of the space of the passenger compartment by the battery 100, so that the space of the passenger compartment is larger, and the design is more flexible.

In the embodiment shown in FIG. 7, in the third direction, the accommodating slot 314 corresponds to the second convex rib 309, and the accommodating slot 314 is defined by a bottom surface of the second convex rib 309 that projects upward. Therefore, while the second convex rib 309 is formed on an upper side surface of the isolating plate 302, the accommodating slot 314 may be formed on a lower side surface, which is beneficial to simplifying a structure of the isolating plate 302 and improving manufacturing efficiency.

According to some embodiments of the present application, optionally, the liquid draining hole 304 communicates with the accommodating slot 314 and the groove 303.

Specifically, the liquid draining hole 304 may extend through one side wall of the accommodating slot 314, and then can communicate with the accommodating slot 314 and the groove 303. In FIG. 11, the liquid draining hole 304 extends through a side plate of the second convex rib 309 that faces the first convex rib 308, so that the second slot 313 of the groove 303 is in communication with the accommodating slot 314.

When electrolyte of the battery cell 20 leaks, the second slot 313 may collect the electrolyte in the first slot 312 and the electrolyte in the second slot 313. The electrolyte in the second slot 313 may be drained from the liquid draining hole 304 and flow to the accommodating slot 314. All or a part of the electrolyte may flow along the side wall of the accommodating slot 314 to the side wall of the press strip 40, then flow along the side wall of the press strip 40 to the through-hole 104 of the insulation layer 103, and then flow to the conductive exposed area 1021 through the through-hole 104, so that the connecting plate 301 is electrically connected to the ground point. The ground point and the connecting plate 301 are equipotential, and therefore the insulation alarm function of the battery 100 is triggered.

According to some embodiments of the present application, optionally, the battery 100 includes a buffer layer 50, and the buffer layer 50 is located between the press strip 40 and the bottom protection plate 102.

Optionally, in FIG. 7, an insulation layer 103 is disposed between the bottom protection plate 102 and the isolating plate 302, and the buffer layer 50 is located between the press strip 40 and the insulation layer 103. The buffer layer 50 may be insulating. In an embodiment, one buffer layer 50 is disposed under each press strip 40. The buffer layer 50 has a long strip shape. A length direction of the buffer layer 50 is along the second direction. A length of the buffer layer 50 is substantially the same as a length of the press strip 40, so that the entire press strip 40 can be pressed against the buffer layer 50.

Optionally, in an implementation, several buffer layers 50 may be disposed under each press strip 40. The several buffer layers 50 are connected or arranged at intervals along the second direction, and a length of the arrangement is substantially the same as a length of the press strip 40. The quantity of buffer layers 50 along the third direction (for example, the up-down direction) is not specifically limited in the present application.

In some examples, a material of the buffer layer 50 may include, but is not limited to, a material that can absorb impact and can restore its own shape, such as foam, rubber, or silica gel.

When the bottom of the battery 100 is impacted, the buffer layer 50 can reduce or eliminate the impact transmitted from the bottom protection plate 102 to the battery cell 20, to avoid damage to the battery cell 20.

According to some embodiments of the present application, optionally, the buffer layer 50 is a buffer layer 50 having a porous structure, and the buffer layer 50 covers the conductive exposed area 1021.

Optionally, in FIG. 7, an insulation layer 103 is disposed on the bottom protection plate 102. The insulation layer 103 is provided with a through-hole 104. An area of the bottom protection plate 102 corresponding to the through-hole 104 is the conductive exposed area 1021. The buffer layer 50 covers the through-hole 104, and further covers the conductive exposed area 1021.

The buffer layer 50 is a porous structure and the buffer layer 50 covers the through-hole 104. In an aspect, when the electrolyte directly flows from the press strip 40 to the buffer layer 50, the buffer layer 50 can absorb the electrolyte, and the electrolyte can be drained from the through-hole 104 to the conductive exposed area 1021. In another aspect, when the electrolyte is directly dropped from the press strip 40 to the insulation layer 103, the electrolyte on the insulation layer 103 flows to the buffer layer 50. The buffer layer 50 can absorb the electrolyte, and the electrolyte may flow from the through-hole 104 to the conductive exposed area 1021. Then, the buffer layer 50 having a porous structure covers the through-hole 104 in collaboration with the buffer layer 50, so that the leaked electrolyte is basically collected by the buffer layer 50 and flows from the through-hole 104 to the conductive exposed area 1021, thereby preventing the electrolyte from flowing to another position.

Optionally, the buffer layer 50 having the porous structure may be a foam layer. It may be understood that, the buffer layer 50 may alternatively be a buffer layer 50 of another porous structure, and is not limited to a foam layer.

In the implementation shown in FIG. 7, an electrolyte leakage path of the battery cell 20 is as follows: electrolyte leakage → the connecting plate 301 & the isolating plate 302 → the liquid draining hole 304 → the press strip 40 → the buffer layer 50 → the through-hole 104 of the insulation layer 103 → the conductive exposed area 1021 of the bottom protection plate 102, so that the connecting plate 301 is electrically connected to the ground point. Communication between any point on the high-voltage circuit of the battery 100 and the ground point can trigger an insulation alarm function of the battery 100. Therefore, the electrolyte leakage can be alarmed through this structural design, and can be processed by relevant personnel (for example, after-sales personnel) in time.

According to some embodiments of the present application, the present application also provides a power consuming apparatus, including a battery 100 in any one of the above solutions, and the battery 100 is used to provide electrical energy to the power consuming apparatus.

The power consuming apparatus can be any of the aforementioned equipment or systems that use battery 100.

In conclusion, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, the various technical features mentioned in the various embodiments can be combined in any way provided that there is no structural conflict. The present application is not limited to the specific embodiments disclosed herein, but includes all technical solutions falling within the scope of the claims.

## Claims

1. A battery, comprising:
a case, wherein the case is internally provided with an accommodating space, the case comprises a bottom protection plate and a ground point, the bottom protection plate is electrically connected to the ground point, and a conductive exposed area is provided on a side surface of the bottom protection plate that faces the accommodating space;
at least one battery cell, wherein the battery cell is accommodated in the accommodating space, and the battery cell comprises a terminal; and
an electrical connection assembly, wherein the electrical connection assembly is accommodated in the accommodating space, the electrical connection assembly comprises a connecting plate, the connecting plate is located between the bottom protection plate and the battery cell, the connecting plate is connected to the terminal, and when electrolyte of the battery cell leaks, the connecting plate is electrically connected to the ground point through the electrolyte and the conductive exposed area.

2. The battery according to claim 1, wherein an insulation layer is disposed between the bottom protection plate and the connecting plate, the insulation layer is provided with a through-hole along a thickness direction, and an area of the bottom protection plate corresponding to the through-hole forms the conductive exposed area.

3. The battery according to claim 1 or 2, wherein the battery comprises a plurality of battery cells arranged along a first direction, two side portions that are close to each other and that are of two adjacent battery cells along the first direction correspond to a same conductive exposed area in a third direction, and the first direction is perpendicular to the third direction.

4. The battery according to claim 1 or 2, wherein the battery comprises a plurality of battery cells arranged along a second direction, two side portions that are close to each other and that are of two adjacent battery cells along the second direction correspond to a same conductive exposed area in a third direction, and the second direction is perpendicular to the third direction.

5. The battery according to any one of claims 1 to 4, wherein the electrical connection assembly comprises an isolating plate located between the bottom protection plate and the battery cell, the connecting plate is disposed on the isolating plate, and the isolating plate is provided with a liquid draining hole for the electrolyte to flow through.

6. The battery according to claim 5, wherein a side surface of the isolating plate that faces the battery cell is provided with at least one groove, a side surface of the battery cell having the terminal is disposed corresponding to the groove, and the groove communicates with the liquid draining hole.

7. The battery according to claim 6, wherein the liquid draining hole extends through a bottom surface and/or a side wall of the groove.

8. The battery according to claim 6, wherein a side surface of the isolating plate that faces the battery cell is provided with a convex rib, and the convex rib defines the groove.

9. The battery according to claim 8, wherein the convex rib comprises a plurality of first convex ribs, a length direction of the first convex rib is along the first direction, the plurality of first convex ribs is arranged at intervals along the second direction, two adjacent first convex ribs along the second direction define two boundaries of the groove along the second direction, and the first direction is perpendicular to the second direction.

10. The battery according to claim 9, wherein along the second direction, two adjacent grooves are spaced apart by a same first convex rib.

11. The battery according to claim 10, wherein each groove communicates with two liquid draining holes, wherein one liquid draining hole is located at one end of one first convex rib along the first direction, and the other liquid draining hole is located at the other end of the other first convex rib along the first direction.

12. The battery according to claim 8, wherein the convex rib comprises a plurality of second convex ribs, a length direction of the second convex rib is along the second direction, the plurality of second convex ribs is arranged at intervals along the first direction, two adjacent second convex ribs along the first direction define two boundaries of the groove along the first direction, and the first direction is perpendicular to the second direction.

13. The battery according to claim 12, wherein along the first direction, two adjacent grooves are spaced apart by a same second convex rib.

14. The battery according to any one of claims 8 to 13, wherein along the second direction, two adjacent grooves communicate with a same liquid draining hole.

15. The battery according to any one of claims 6 to 14, wherein the battery comprises a plurality of rows of battery cells, the plurality of rows of battery cells is arranged along the first direction, each row of battery cells comprises at least one battery cell, the battery comprises an insulating press strip, a length direction of the press strip is along the second direction, two side portions that are close to each other and that are of two adjacent battery cells along the first direction are connected to a same press strip in the third direction, the press strip separates the bottom protection plate and the electrical connection assembly, and the first direction, the second direction, and the third direction are perpendicular to each other.

16. The battery according to claim 15, wherein the groove comprises a first slot and a second slot, the first slot communicates with the liquid draining hole through the second slot, a depth of the second slot is greater than a depth of the first slot, and the liquid draining hole is provided at a position on a bottom surface of the second slot close to the press strip.

17. The battery according to claim 15, wherein the electrical connection assembly comprises an isolating plate located between the bottom protection plate and the battery cell, the connecting plate is disposed on the isolating plate, a side surface of the isolating plate that faces the bottom protection plate is provided with an accommodating slot, and the press strip is partially located in the accommodating slot.

18. The battery according to claim 17, wherein the liquid draining hole communicates with the accommodating slot and the groove.

19. The battery according to claim 15, wherein the battery comprises a buffer layer, and the buffer layer is located between the press strip and the bottom protection plate.

20. The battery according to claim 19, wherein the buffer layer is a buffer layer having a porous structure, and the buffer layer covers the conductive exposed area.

21. A power consuming apparatus, comprising the battery according to any one of claims 1 to 20, wherein the battery is configured to provide electric energy.
